(19) 

Europäisches
Patentamt
European
Patent Office
Office européen
des brevets

(11) **EP 2 793 566 B1**

(12) **EUROPEAN PATENT SPECIFICATION**

(45) Date of publication and mention
of the grant of the patent:
**19.04.2017 Bulletin 2017/16**

(51) Int Cl.:
***A01K 61/00*** *(2017.01)*  ***A01M 29/16*** *(2011.01)*

(21) Application number: **12818650.9**

(86) International application number:
**PCT/NO2012/000070**

(22) Date of filing: **20.12.2012**

(87) International publication number:
**WO 2013/095153 (27.06.2013 Gazette 2013/26)**

(54) **SYSTEM AND METHOD FOR INHIBITING PARASITES TO INFEST AND ATTACH TO AQUATIC ANIMALS**

SYSTEM UND VERFAHREN ZUR HEMMUNG VON WASSERTIERE BEFALLENDEN UND DARAN ANHAFTENDEN PARASITEN

SYSTÈME ET PROCÉDÉ DESTINÉS À EMPÊCHER DES PARASITES D'INFESTER ET DE SE FIXER À DES ANIMAUX AQUATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2011 NO 20111752
23.03.2012 NO 20120349**

(43) Date of publication of application:
**29.10.2014 Bulletin 2014/44**

(73) Proprietor: **Skogseth, Arnvid
5627 Jondal (NO)**

(72) Inventor: **Skogseth, Arnvid
5627 Jondal (NO)**

(74) Representative: **Acapo AS
P.O. Box 1880 Nordnes
5817 Bergen (NO)**

(56) References cited:
**WO-A1-94/17657    WO-A1-97/27744
US-A- 4 922 468    US-A- 4 951 410**

• **FARRELL R K ET AL: "EFFECT OF ULTRASOUND
ON TREMATODE CERCARIAE", THE JOURNAL
OF PARASITOLOGY, AMERICAN SOCIETY OF
PARASITOLOGISTS, US, vol. 59, no. 4, 1 August
1973 (1973-08-01) , page 747/748, XP000654048,
ISSN: 0022-3395**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The present invention relates to systems for inhibiting one or more parasites to infest and/or attach to aquatic animals, for example fish such as salmon Moreover, the present invention also concerns methods of operating aforesaid systems. Furthermore, the present invention relates to software products recorded on machine-readable data storage media, wherein the software products are executable on computing hardware for use in implementing aforesaid methods.

**Background of the invention**

It is well known that aquatic animals, for example fish, are susceptible to infestations of parasites which are not directly a cause of morbidity when found in lower numbers but which can adversely influence a commercial value of the animals when harvested and eventual sold as food. More specifically, animals such as Atlantic salmon are susceptible to infestations of salmon lice (*Lepeophtheirus salmonis*) which are small parasites which attach themselves to an outer surface of salmon fish and derive their nutrition from the fish. Fish which are free of such parasites are able to command higher eventual market prices, for example on account of being of premium quality.

Salmon lice are especially problematic when intensive salmon cultivation is undertaken, for example within cages located in fjord regions of water where many salmon share a restricted spatial enclosure and where illness and parasites can spread quickly and easily from one fish to another. Various approaches have been proposed for treating salmon bearing lice, for example vaccines in fish food, mechanical scraping devices for scraping lice from external surfaces of salmon and so forth. Problems associated with such known contemporary methods of removing lice from salmon include high cost of materials employed and limited effectiveness at removing lice. Occurrence of lice is less common in wild ocean salmon which are not limited to aquaculture cages, and which are less frequently in close spatial proximity to other salmon, thereby rendering spread of parasites less rapid in the case of wild ocean salmon.

Although various apparatus and associated methods are contemporarily known for assisting aquatic animals (see e.g. WO 94/17657 A1 disclosing a system and a method according to the preamble of independent claims 1 and 5), for example removing lice from salmon, it is desirable to develop more commercially effective and convenient approaches. It is thus an object of the present invention to inhibit infestation and/or attachment of parasites to aquatic animals.

**Summary of the invention**

The present invention seeks to provide a system for inhibiting one or more parasites to infest and/or attach to aquatic animals.

According to a first aspect of the present invention, there is provided a system as defined in claim 1, i.e. a system for inhibiting one or more parasites to infest and/or attach to one or more aquatic animals, characterized in that said system includes an acoustic arrangement for generating an acoustic image in a vicinity of the acoustic arrangement within or in a vicinity of an aquatic environment accommodating said one more aquatic animals and/or parasites, wherein said acoustic arrangement generates signals at frequencies within 9-100 Hz.

Optionally, said acoustic arrangement generates signals at frequencies within 9-60 Hz, more preferable 9-40 Hz or 40-60 Hz.

Preferable, said acoustic arrangement generates signals at frequencies within 9-40 Hz

Preferable, the acoustic arrangement generates signals with an acoustic pressure in said aquatic environment of about 1000 Pa or more.

Preferable, said acoustic pressure in said aquatic environment is in the range of about 1000 - 14000 Pa, more preferable about 2000-12000 Pa, more preferable about 4000-12000 Pa more preferable about 6000-12000 Pa, more preferable about 8000-12000 Pa, and more preferable about 12000-14000 Pa, and more preferable about 12000 Pa.

Preferable, the pulse length of the generated signal has a duration of 1-10 seconds, more preferable 1-3 seconds, more preferable about 2-3 seconds

Preferable, the generated signal consists of several repeated pulses, and wherein the interval between two pulses is at maximum 5 sec, more preferably 1-3 seconds.

Preferable, the acoustic image is applied continuously to the aquatic environment, i.e. the acoustic image pulses are repeated continuously and the pulse length of each of the repeated pulses have a duration of 1-10 seconds, more preferable 1-3 seconds, more preferable 2-3 seconds, and the interval between the repeated pulses is 5 seconds or less, more preferable 1-3 seconds.

Preferable, the generated signal is provided as a sweep of the frequencies in the range of 9-50 Hz, more preferable in the range of 9-40 Hz.

Preferable, said aquatic environment is in a spatial vicinity of said acoustic arrangement for receiving said acoustic image.

Preferable, the system is adapted to salmon lice as the one or more parasites and salmonids, preferable salmon and/or trout, as the one or more aquatic animals.

Preferable, the system is adapted to inhibit the infestation and attachment of said lice in their copepodid stage Preferable, the system is adapted to be used in conjunction with one or more aquaculture cages.

Preferable, the acoustic arrangement includes a signal waveform generator for generating a signal waveform (S1) and a transducer arrangement for converting in operation said signal waveform (S1) to corresponding sound waves and/or pressure fluctuation and/or particle acceleration in said aquatic environment to generate the acoustic image.

Preferable, the signal waveform generator is operable to generate said signal waveform (S1) to include at least one of

(a) one or more pseudo-continuous tone frequencies,
(b) one or more pulsed tone frequencies;
(c) one or more temporally swept tone frequencies within one or more frequency bands.

The system includes a sensor arrangement for detecting a spatial proximity of said one or more parasites, or an increase in the concentration of said one or more parasites, and the system is arranged for applying said acoustic image depending upon the sensed spatial proximity of said one or more parasites to said acoustic arrangement.

Preferable, the acoustic arrangement is implemented as one or more underwater loudspeakers or a configuration of underwater loudspeakers, piezoelectric underwater transducers, vibrating surfaces, oscillating volume or means for establishing a sudden pressure change in said aquatic environment.

The present invention provides in a second aspect a method, as defined in claim 5, for inhibiting one or more parasites to infest and/or attach to one or more aquatic animals, characterized in that said method uses an acoustic arrangement for generating an acoustic image in a vicinity of the acoustic arrangement within and/or in a vicinity of an aquatic environment accommodating said one or more aquatic animals and/or parasites, wherein said acoustic arrangement generates signals at frequencies within 9-100 Hz.

Optionally, the acoustic arrangement generates signals at frequencies within 9-60 Hz, more preferable 9-40 Hz or 40-60 Hz.

Optionally, the acoustic arrangement generates signals at frequencies within 9-40 Hz

Optionally, the acoustic arrangement generates signals with an acoustic pressure in said aquatic environment of about 1000 Pa or more.

Optionally, the acoustic pressure in said aquatic environment is in the range of about 1000 - 14000 Pa, more preferable about 2000-12000 Pa, more preferable about 4000-12000 Pa more preferable about 6000-12000 Pa, more preferable about 8000-12000 Pa, and more preferable about 12000-14000 Pa, and more preferable about 12000 Pa.

Optionally, the pulse length of the generated signal has a duration of 1-10 seconds, more preferable 1-3 seconds, more preferable about 2-3 seconds.

Optionally, the generated signal consists of several repeated pulses, and wherein the interval between two pulses is maximum 5 seconds, more preferably 1-3 seconds

Optionally, the acoustic image is applied continuously to the aquatic environment, i.e. wherein the acoustic image pulses are repeated continuously and wherein the pulse length of each of the repeated pulses have a duration of 1-10 seconds, more preferable 1-3 seconds, more preferable 2-3 seconds, and wherein the intervals between the repeated pulses are 5 seconds or less, more preferable 1-3 seconds.

Optionally, the generated signal is provided as a sweep of the frequencies in the range of 9-50 Hz, more preferable in the range of 9-40 Hz.

Optionally, the system is adapted to inhibit the infestation and attachment of said lice in their copepodid stage.

A third aspect of the present invention provides a software product, as defined in claim 13, stored on machine-readable data storage media, characterized in that said software product is executable upon computing hardware for implementing a method as claimed in any one of claims 5-12.

**Description of the diagrams**

Embodiments of the present invention will now be described, by way of example only, with reference to the following diagrams wherein

FIG. 1    is an illustration of a system pursuant to the present invention;
FIG 2    is an illustration of a signal generating arrangement of the system in FIG. 1.
FIG. 3    shows the boxplot of exposed and control group, i e. total number of lice found on the fish (inside mouth, on gills, on skin and fins).
FIG. 4    shows the boxplot of exposed and control group for the lice found on the outer surface of the fish (skin and fins)

In the accompanying diagrams, an underlined number is employed to represent an item over which the underlined number is positioned or an item to which the underlined number is adjacent. A non-underlined number relates to an item identified by a line linking the non-underlined number to the item When a number is non-underlined and accompanied by an associated arrow, the non-underlined number is used to identify a general item at which the arrow is pointing

## Description of embodiments of the invention

The present invention is applicable to aquatic animals in general, although application of the invention to assist salmon fish in particular is described in detail for illustrating the invention.
The life cycle of the salmon louse (*Lepeophtheirus salmonis*) can be considered to include ten distinct stages, namely Stage 1 to Stage 10 Stages 1 and 2 relate to a free-swimming *nauplius* I and II, namely creatures having a length in a range of 0.54 mm to 0.85 mm Stage 3 relates to a *copepodit* phase, in which creatures have a length in an order of 0 7 mm and are capable to attaching themselves to an outer surface of salmon fish, thereby becoming anchored to the fish Stages 4 to 7 relate to *chalimus* phases, wherein the creature eats from the fish and grows to a length of 5 mm for male creatures, and 10 mm for female creatures. Each generation of the creature takes in an order of six weeks to grow at a water temperature in a range of +10°C to +12°C In pre-adult and adult phases, namely Stages 7 to 10, the creature, namely louse, is mobile and its gender, namely whether male or female, can be determined by inspection

The present invention is concerned with systems, and also methods of applying the systems, by hindering the infestation and attachment of parasites to fish, for example fish such as salmon fish Such parasites are not usually fatal or particularly deleterious to their animal hosts when found in lower numbers, but can adversely affect a value of the animals when eventually sold as food Premium quality animals devoid of any effects from parasites are potentially susceptible to achieve highest prices when sold. The systems are adapted to target Stage 3 (copepodid), using a variety of techniques For example, in aforementioned Stage 3, the systems are adapted to prevent parasites from attaching themselves to aquatic animals, for example for preventing lice from attaching themselves to salmon fish. The systems pursuant to the present invention can therefore be used to at least reduce, or at least partially prevent, detrimental effects both physiologically for the aquatic animals as well as economically for a marine harvester associated with the aquatic animals.

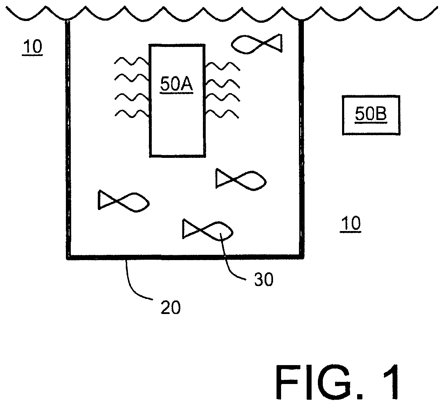

In FIG 1, there is shown an aquatic environment **10** including a fish cage **20** in which one or more aquatic animals **30** are contained, for example one or more salmon fish.

Apparatus pursuant to the present invention is included in at least one of

(a) a main portion of the cage **20,** namely apparatus as denoted by **50A,** and
(b) external to the cage 20, namely apparatus as denoted by **50B**

The apparatus **50A** will hinder parasites which have entered the cage **20** to infest and attach to the fish in the cage **20,** whereas the apparatus **50B** will start the process of habituating the parasites to the applied signal so that the probability for infection already is reduced once the parasites enter cage 20

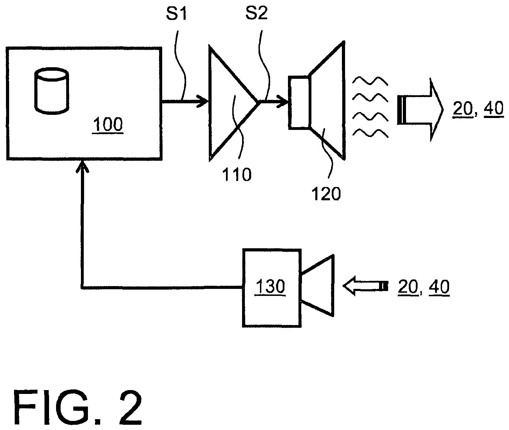

The apparatus **50A, 50B** are illustrated in FIG. 2 wherein they include a signal generating arrangement **100** for generating a signal waveform S1, a driver amplifier **110** for amplifying the signal waveform S1 to generate a sound driver signal S2, and a transducer arrangement **120** for converting the sound driver signal S2 into sound waves and/or pressure waves and/or particle acceleration within a volume of water delimited by the cage **20** and/or the vicinity of the cage **20;** there is thereby generated an acoustic image within the cage **20** or in the proximity of the cage **20,** respectively. As evident from the example section, the sound waves preferable have a certain pressure component. Optionally, the signal generating arrangement **100** includes computing hardware operable to execute software products for generating the signal waveform S1.
The apparatus **50A, 50B**, as appropriate, is operable to inhibit parasites to locate, infest, or attach to the aquatic animals **30,** by generating sound waves/pressure waves/particle acceleration at one or more of:

(i) single frequencies, and
(ii) a combination of frequencies.

The frequencies are in a range of 9-100 Hz.

The signal waveform S1 is optionally temporally vaned, for example one or more of:

(a) pseudo-continuous;
(b) intermittent, for example a sequence of ON-OFF pulse bursts, and
(c) temporally swept in frequency.

According to the invention, one or more of the apparatus **50A**, **50B** are provided with proximity sensors **130,** for example optical sensors, so that the parasites are only subjected to a sound generated by the transducer arrangement **120** when the one or more parasites are present at a specific spatial location within the cage **20** and/or in its vicinity. It is desirable that the parasites, for example salmon lice, exhibit a different response specifically when exposed to the sound. As evident from the example section, we have found that acoustic signal with a certain pressure component will enhance or trigger the activity of the parasites, whereas the fish (salmon) is not influenced by this treatment. However, it is not the increased activity per see that is the basis for the proposed invention; rather it is the observed effect that the response of the parasites will rapidly decline if the triggering signal is repeated often enough It is believed that the rapid repetition of the signal leads to a form of habituation in the parasites which produces the observed results of lower infection rates on salmon exposed to parasites together with the described acoustic image.

Furthermore, this forms the basis for this application where it is taken advantage of this susceptibility to the applied signal leading to a temporary habituation to the signal or possibly a saturation of sensory organs giving the observed effect of reduced activity.

The sound is also conveniently referred to as being an "acoustic image" as aforementioned. A composition and intensity of the "acoustic image" is optionally adapted depending upon a desired result, for example for disabling, disturbing, and/or discouraging said one or more parasites and/or for the prevention of attachment of the parasites to the aquatic animals **30.** Both the one or more frequencies and/or the amplitude of the sound waves/pressure waves/particle acceleration present in the signal waveform S1, namely the acoustic image, are beneficially tuned to a maximum and/or optimal observable effect for each Stage 1 to 3, of the life cycle of the parasite associated with the one or more aquatic animals **30.** The amplitude of the acoustic image is optionally varied depending upon whether long term or short assistance for the aquatic animals **30** is desired Beneficially, the acoustic image is used for triggering an increase in activity in the parasites, although this is not the end goal of the method. If the signal is repeated at short intervals the high activity level will quickly be reduced to a low/medium level and stay at this level for the duration of the applied acoustic image. This decline in activity is attributed to a form of habituation (or sensory jamming) of the parasites that prevent them finding their hosts, namely the one or more aquatic animals, and/or for triggering an escape/attack/flight response of the parasites The term "habituation" is used to cover all mechanisms that could be responsible for the decline in activity level, which we have shown are correlated with a reduced infestation and attachment of the parasites to the fish (example 5) Beneficially, an optimal configuration for the acoustic image is tuned to achieve a maximal observable effect for the parasite, for example salmon louse, and minimal observable effect for the one or more aquatic animals **30,** for example one or more salmon fishes.

In intensive aquaculture, as aforementioned, it is highly desirable to avoid needing to employ expensive vaccines/medicines, and yet deliver for sale best quality animals for food production. The apparatus **50A, 50B** is capable of achieving such an aim without causing environmental pollution and contamination.

Optionally, the system **50** is equipped with light emitting means for centring of the dark and light conditions perceived by the parasites, for instance by simulating a condition of shadow, so that the directional movement of the parasites can be manipulated in order to concentrate the parasites to a specific location where the acoustic images of the apparatus 50 is applied

The transducer arrangement **120** is beneficially implemented as one or more underwater loudspeakers or a configuration of underwater loudspeakers, piezoelectric underwater transducers, vibrating surfaces, oscillating volume and similar.

The invention is of benefit in that it potentially creates no environmental contamination and is also susceptible to being kept in operation over many years, thereby amortizing its initial cost. Moreover, the present invention also potentially avoids a need to employ vaccines/medication against parasites. It is thus to be appreciated that the present invention provides many synergistic benefits, for example in the field of salmon aquaculture. However, the present invention is not limited to salmon production, and can be applied to assist other types of aquatic animals.

The generating arrangement **100,** for example implemented using computing hardware and operable to execute software products, is optionally arranged to function in an adaptive manner to determine, for example, particular favourable types of acoustic image to employ to result in a minimum infestation of parasites Such adaptation is beneficially in an event that the parasites, for example salmon lice, evolve to recognize and circumvent particular acoustic images provided by the apparatus **50A, 50B.** Such adaptive operation of the apparatus **50A, 50B** is thereby potentially effective at combatting the parasites, for example salmon lice, becoming effectively immune, namely non-responsive, to certain acoustic images. Such adaptation of the apparatus **50A, 50B** is beneficially achieved by way of the apparatus **50A, 50B** applying variants of the acoustic images and correlating variants with subsequent changes in the size of population of the parasites.

Modifications to embodiments of the invention described in the foregoing are possible without departing from the scope of the invention as defined by the accompanying claims. Expressions such as "including", "comprising". "incorporating", "consisting of", "have", "is" used to describe and claim the present invention are intended to be construed in a non-exclusive manner, namely allowing for items, components or elements not explicitly described also to be present Reference to the singular is also to be construed to relate to the plural Numerals included within parentheses in the accompanying claims are intended to assist understanding of the claims and should not be construed in any way to limit subject matter claimed by these claims.

Experimental section

Example 1

Salmon bearing lice were housed in large containers. Salmon lice (adult mobile stage) were removed from said salmons, and the lice were transferred to small containers containing seawater The lice containing containers were placed on the top of a sound generating means and sound waves in the frequency area from 20 - 1000 Hz were applied The sound waves were generated using a computer with software capable of generating sinus signals, and a loudspeaker and an amplifier.

The sea lice responded to the applied sound waves in the frequency range from about 150 to 300 Hz. The response was monitored by visual inspection and by a video camera The volume of sea water in the container was increased and the dilution effect had no visible effect on the responses of the sea lice to the sound waves. However, we were able to monitor an effect when we increased the intensity of the sound waves.

By giving frequenting sound, i.e. on-off, on-off at a given frequency we clearly saw reactions on the lice every time the sound was turned on, and they immediately calmed down as the sound was turned off.

We also lifted the container with the salmon lice a few centimeters up from the loudspeaker, so there was no direct contact between the container and the loudspeaker, and the reactions of the lice were similar.

Example 2

Salmons were removed from the net cage and placed in large containers with circulating water at the fish farm. In this test we used an underwater loudspeaker which was lowered into the container. The purpose of this test was to see if the sound gave a reaction to the salmon, so it became stressed or had an abnormal behavior.

The experiment was supervised by a salmon technician who was experienced in observing salmon. Signal waveforms were applied for about 24 hours We could not see any abnormal behavior in the salmon, either when sound was turned on or when the frequency was varied (0-1000 Hz)

Example 3

In connection with example 2 we also removed lice from the salmon and tested the salmon lice with the same method and equipment as used in example 1. However, we observed that the lice reacted less to the applied signal waveform than in the tests in example 1

The water containing the sea lice was than heated and we got a better response, and it seems that the temperature of the aqueous environment the lice are captured in has an effect on the response to signal waveforms

Example 4

«Activation» of copepodids (*Lepeophtlieirus salmonis*) by acoustic fields

This example evaluates the effect of an acoustic signal on copepodids (stage 3 of the life cycle of salmon louse) in a water environment. The method was designed to measure the effect of either pressure or acceleration. Video recordings showing the copepodids are used for the subsequent analysis of the experiment.

Copepodids

Copepodids (*Lepeophtheirus salmonis*) were procured from ILAB (Stiftelsen Industrilaboratoriet), Thormøhlensgate 55, 5008 Bergen, Norway. The copepodids were stored in sea water (from ILAB) in plastic containers, aerated daily and kept at about 4-6°C when not used in the experiment chamber. According to ILAB the Copepodids collected contained only a marginal amount of Nauplius (i.e. stages I and II).

Analysis

Based on examples 1 and 2, the target frequency range for the current tests is between 3-1000 Hz. The activity level of the copepodids are qualitatively ranked according to low, medium and high activity The recorded control sequences constitute an important tool for defining a baseline activity level that is used as the ranked level "low activity". Also, the experience gained by the experimenters and the observation of varying levels of activity during the different tests, gives the baseline for the activity level that constitutes "high activity" High activity level typically constitutes several of the copepodids near simultaneously performing attack/flight behavior visible as high speed movement across the width of the chamber or performing high speed looping movement. It is clearly distinguishable from the more intermittent rapid movement seen in the control sequences. Medium activity level is a level of activity between low and high, i.e it is observed a higher activity level than for the controls, but not to the extent of 'high' where a larger number of copepodids show near simultaneous 'jumping/'looping.

The experiment setup permitted two modes of operation, acceleration and pressure mode (see below). The dimensions of the chamber are much smaller than the acoustic wavelength at the relevant frequencies. This implies that it is not possible to achieve a propagating wave inside the chamber. However, the setup allows for the separation of these two components normally found together in an acoustic wave permitting greater insight into which component (pressure or acceleration) is of importance when a response is observed in the copepodids. In acceleration mode the whole chamber is accelerated by the shaker piston. In pressure mode the chamber is locked down and the shaker piston compress the water leading to a pressure buildup. The full frequency ranges of 3-1000 Hz for both modes were scanned for effect.

Pressure, acceleration and temperature measurements where controlled by the same computer that controlled shaker excitation.

Shaker excitation

The signal that was driving to the shaker was generated in a function generator (NI-PXI 5402) and amplified in a power amplifier (LDS25PA).

Pressure measurements

The pressure was measured with a 106B50 IPC dynamic pressure sensor. A signal conditioner (PCB 442C04) provided the driving current to this active sensor in addition to signal conditioning The data were collected on a 24-bit ADC (NI-PXI 4496) and stored in the computer.

Acceleration measurements

Three accelerometers (Type PCB 333B50) where used to pick up vibrations in three directions. The accelerometers were mounted on the glass walls of the test chamber (using wax) in three orthogonal directions, "Acc1" in the direction of excitation, "Acc2" normal to "Acc1" in the horizontal plane and "Acc3" in the vertical direction

Temperature regulation. 10°C+-2 degrees and evaluated to converge towards target of ~10°C before start with injection of about 100 copepodids into chamber

Results

i) Acceleration mode

Low activity is observed throughout the frequency range of 3-1000 Hz

Thus, in contrast to the alleged effect indicated in the prior art, i.e that copepodids are susceptible to acceleration, we have found that the current experiment does not show an increase in activity level of copepodids, at least for the accelerations levels found in an acoustic signal.

A freely propagating acoustic wave can (by approximation) be described as a plane wave when looking at a small volume at some distance from the source. In a harmonic (single frequency) plane wave the following relation exists between the amplitude of the particle acceleration, a, and the acoustic pressure, P

$$a = \frac{2\pi f P}{\rho_0 c},$$

where $f$ is the frequency, $\rho 0$ is the density and c is the speed of sound in the medium.

ii) Pressure mode

When the acoustic wave was applied in a pressure mode, we observed that the copepodids were affected (activated) by the signal

Frequency dependence

Table 1 shows the summary of the findings when it comes to activity level related to frequency The evaluated overall activity level is qualitative and method for evaluation is described above.

Table 1

| Activity level of copepodids related to applied frequency | |
| --- | --- |
| **Frequency range** | **Overall activity level** |
| 3-8 Hz | Low |
| 9-10 Hz | Medium |
| 10-40 Hz | High |
| 40-60 Hz | Medium |
| 60-100 Hz | Medium/low |
| 100-300 Hz | Low |
| 300-700 Hz | Low |
| 700-1000 Hz | Low |

Pressure dependence

As a baseline, all tests attempted to use the maximum shaker piston amplitude to achieve the highest possible pressure buildup permissible by the shaker
For the range 10-31 Hz showing high overall activity level it was attempted to vary the shaker amplitude to investigate pressure dependence on activity. Pressure dependence in activity level was found with the highest activity level correlating to the highest pressure buildup The results are given in table 2.

Table 2

| Pressure dependence of activity level | | | |
| --- | --- | --- | --- |
| Frequency range | Shaker input signal | Measured pressure | Overall activity level |
| 10-31 Hz (2.4 sec) | 300mV | ~3000Pa | Medium |
| 10-31 Hz (2.4 sec) | 400mV | 4000-8000Pa | Medium/high |
| 10-31 Hz (2.4 sec) | 500mV | 10000-12000Pa | Medium* |
| 10-31 Hz (2 4 sec) | 600mV | 12000-14000Pa | High** |
| *Overall repetitions showed medium level One repetition showed low activity level. <br> **All repetitions showed high activity level | | | |

Pulse duration

A frequency (14Hz) that showed good response was selected to attempt varying duration of pulse length (Table 3). This was done to investigate the effect of varying pulse length on activity level. It was observed medium to high activity for both 3 and 10 sec duration However, for 3 sec duration activity level was consistent throughout the pulse whereas for a 10 sec duration the activity level varied (down to low) during the course of the pulse.

Table 3

| Pulse duration dependence of activity level | | | |
|---|---|---|---|
| Frequency | Amplitude | Duration | Activity level |
| 14 Hz | 520mV | 0.35 sec | Low |
| 14 Hz | 520mV | 1 sec | Low/Medium |
| 14 Hz | 520mV | 3 sec | Medium/high |
| 14 Hz | 520mV | 10 sec | Medium/high |

Repetition rate

An effect attributed to habituation or a temporary weakening of the copepodids sensory system was found if the pulse repetition rate was faster than once every 10 sec In other words, for a more rapid pulse rate than one repetition per 10 sec (>0.1 Hz) a decline in activity level could be observed (data not shown). It can be deducted that rapid pulse repetition (between 0 6 sec up to 4.5 sec) will give high initial response for the first 2-3 pulses, then a decline towards medium, medium/low activity for the following repetitions. It is also observed that the copepodids will recuperate to high activity level if given a break of 15 sec before repetition of the pulse(s). In the following text we will use the word "habituation" to cover all mechanisms that could be responsible for the decline in activity level observed with rapidly repeating signal.

Sweep vs. single frequencies

It was qualitatively deducted that a sweep of the frequencies in the range 10-50 Hz provided a consistently high level of response as long as the sweep was completed during a 1.6-3 sec time period. Based on these findings the majority of the tests were performed using a sweep of a frequency range instead of single frequencies.

Conclusions from these experiments (example 4)

A series of experiments were conducted in an attempt to evoke a flight/attack response in copepodids (*Lepeophtheirus salmonis*) using either acceleration pulses or pressure pulses of varying amplitudes, frequencies, duration and intervals. Both single frequencies and sweeps through several frequency ranges were attempted For all attempts using acceleration pulses the activity level was evaluated as low, i.e. not showing a difference from the recorded control sequences. For pressure pulses it was identified a region where the copepodids displayed a high activity level markedly different from the recorded control sequences.

For pressure pulses, the initial screening detected high activity levels within a region from 3-100 Hz. Through repeated testing this range was narrowed down to 9-40 Hz. This finding is clearly beneficial for future tests as our experiments show that the copepodids are susceptible to pressure pulses, but literature reports that salmon is not.

High activity level was shown for pressures in the range of 8000-12000 Pa, and also above 12000 Pa.

It was found that the duration of the applied pulse achieved the highest impact on activity level when the pulse lasted from 2-3 seconds.

The experiment confirmed that previously reported repetition rates of <10 seconds would cause habituation in the copepodids The copepodids exhibited a remarkable ability to recuperate if given a pause of 10-15 seconds and showed high activity level again if given such a pause.

Through qualitative analysis it was found that stimulating the copepodids with a sweep through selected frequencies provided a consistently higher activity level than applying a single frequency with otherwise near equal parameters.

We can thus conclude that frequencies of a narrow frequency window of 9-40 Hz, and with a pressure component in the range of 8000-12000 Pa will enhance the "activity level" of the lice. Further, the experiment shown in example 5 will attempt to take advantage of the habituation effect observed when pressure pulses are repeated with short intervals to see if this can have an influence on the infestation levels in their host organism, e.g. salmon.

Example 5

Infection prevention of salmon

The goal of the present experiment (example 5) is to determine if the stimulation regime found to trigger high activity in copepodids (example 4) combined with a high repetition rate that induced the observed habituation effect also will reduce copepodid infection rates in salmon. The experiment will therefore subject salmon and copepodids located in the same chamber to the stimulation regime previously found to trigger high activity in copepodids for a predetermined amount of time before the fish is collected. The number of copepodids attached to the fish will then be counted to determine infection rates. A control group will be subject to the same procedure and experiment conditions except that for this group no stimulation regime will be applied.

Salmon

Atlantic salmon (*Salmo salar*) guaranteed free from infection by salmon lice were provided by Bremnes Seashore, Bømio. The approximate length of the fish was ~17 cm They were transferred from freshwater to saltwater 2 days prior to the start of the experiment. The water was aerated and maintained ~85% oxygen saturation level with 8.5-10°C water temperature throughout the time period of the experiment. To maintain water quality in the storage tank the fish were not fed during the week of the experiment.

Copepodids

Copepodids (*Lepeophtheirus salmonis*) were procured from ILAB (Stiftelsen Industri-laboratoriet), Thormøhlensgate 55, 5008 Bergen, Norway According to ILAB the Copepodids collected contained only a marginal amount of Nauplius

Chamber design

A -120 liter (intenor size 50x90x~27cm) experiment chamber that allows for infection experiments using copepodids and salmon has been designed and built During experiments the chamber is completely filled with water and the lid is hatched down in order to achieve maximum pressure build-up during the experiment runs The pressure buildup is provided by an integrated piston attached by a strut to the vibration shaker. The shaker drives the piston providing compression of the water leading to pressure build-up during the experiment runs. The top lid is transparent to allow for observation of animal welfare and video recording of the events During the experiment the lid is hatched down to allow for the compression of the water in the chamber with the resulting pressure build-up. At the start of the experiment copepodids are injected into the chamber through two valves located on the long side of the chamber. Pressure and temperature inside the chamber are logged by sensors. A propeller is located inside the chamber that provides a circulating current (-3 cm/s) providing a near homogenous distribution of copepodids in the water body Shaker excitation, and pressure and acceleration measurements are as given in example 4.

The test regime attempted used was as given in table 4.

Table 4

| Target stimulation regime | | | | | |
|---|---|---|---|---|---|
| **Acoustic component** | **Sweep frequency range** | **Pressure** | **Pulse Duration** | **Repetition rate** | **Total duration** |
| Pressure pulse | 10-31 Hz 2 periods per Hz | 12000 Pa | ~2.4 sec | ~1 6 sec delay from stop to start of next pulse | 14 minutes |

The purpose of the test is to subject salmon to copepodids for a pre-determined number of minutes and apply the stimulation regime detailed in Table 4. In total, 16 salmon (four at the time) and approximately 300 copepodids for each set of four fish are placed inside a ~120I chamber and subject to the simulation regime. Also, in total, 16 salmon (four at the time) and ~300 copepodids for each set of four fish will also function as controls subject to the same experiment protocol, but with the difference that no pressure pulses will be applied.

Immediately after the end of the experiment, i.e 14 minutes after start, the fish are removed from the experiment chamber. The fish are collected using a landing net and it is attempted to catch all 4 fish in the net at the same time.

The fish are then transferred as quickly as possible to individual plastic bags and knocked dead by a blow to the head. Each plastic bag has been given a random number (between 1-1000) and the order of the vibration and control experiments have also been selected at random After each experiment the plastic bags with the fish are transferred to a fridge. The plastic bags are mixed at random with any bags already in the fridge. After 8-12 fish have been gathered personnel from ILAB collects the fish and later counts the number of copepodids according to the procedure described in the appendix attached at the end of the report. The person counting the copepodids do not know which fish have been subject to pressure pulses and which have not, or which fish were tested simultaneously

The analysis for this experiment consists of counting of the number of copepodids that have infected each fish during the course of the 14 minute experiment run. The data allows for separation of the counted copepodids found inside the mouth/on the gills, and the copepodids found on the surface of the fish The total number is used for the main analysis, but the results are also analysed using only the data from the mouth and on the gills, and also using only the copepodids found on the surface of the fish.

A null-hypothesis is assumed, i.e. that there is no difference between the control group and the group exposed to the stimulation regime Statistical analysis is then used to confirm or reject the hypothesis The data set consists of two groups, a group exposed to the stimulation regime to be tested and a control group.

When using the total number of copepodids attached to the fish the analysis shows that there is a statistically significant difference between the two groups, and that the group of salmon exposed to the acoustic image has a lower number of copepodids attached than the control group. The reported p-value is 0.002 (Wilcoxon rank-sum statistic), i.e. there is a 99,8% probability that the result is because there is a difference between the groups and not the result of randomness and due to chance

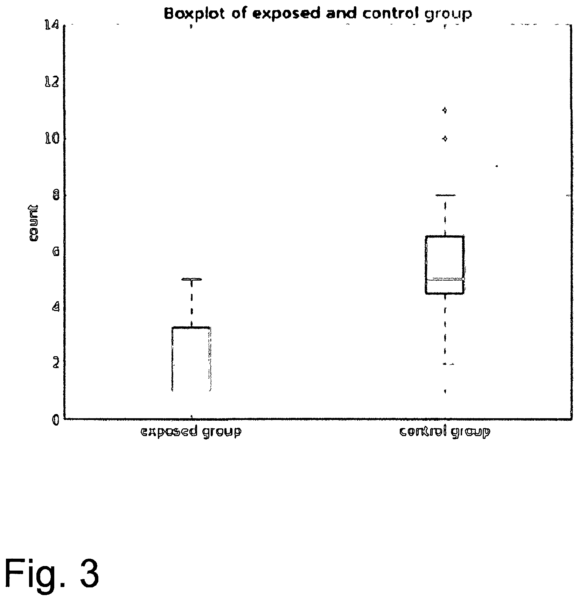

We have also analysed the number of copepodids inside mouth and on gills (data not shown), and the number of copepodids on the surface of the salmon, and the results are provided in the figure 3. For the copepodids inside the mouth and on the gills there was not a statistically significant difference between the two groups. In the analysis using only the copepodids attached to the surface of the fish the result was statistically significant with a p-value of 0.002.

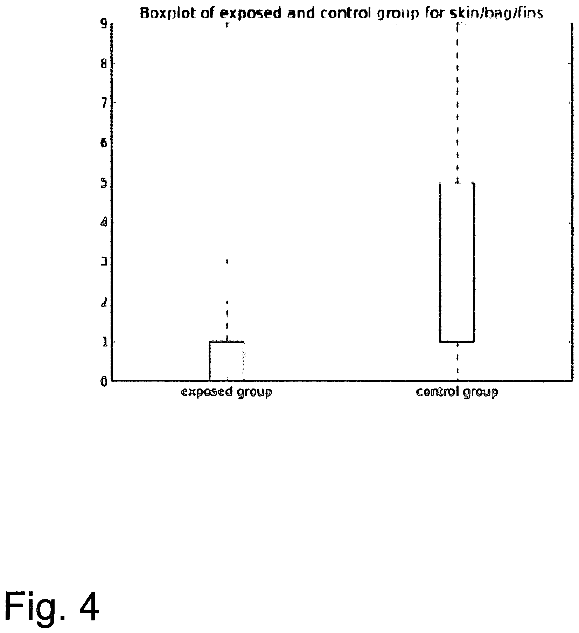

Figure 4 shows the boxplot of the exposed group and the control group We can observe that over 75% of the data in the exposed group has a lower count than 4, which is lower than of 75% of the data in the control group. Furthermore, the most extreme value in the exposed group (5) is equal to the median of the control group. This indicates a shift towards lower values in the exposed group.

Results from the pressure sensor located within the chamber show that pressure buildup was less than the target value In the previous experiment using copepodids-only it was found that a pressure buildup of 12 000 Pa provided a consistently high level of observed activity. Peak pressure buildup in the current infection experiment was ~6000Pa, but pressure declined as frequency increased towards 31 Hz. The main source of the difference is believed to stem from scaling the experiment from 1l (example 4) to 120l (example 5) in laboratory conditions. However, the results from the current experiment show that the lower pressure profile also has a significant effect on the infection rate in this experiment.

Conclusions

It is found that in this experiment there was a statisticafly significant difference in the salmon copepodid infection rates for the treated group and the control group (p-value=0.002). The median number of copepodids found on each salmon in the control group was 5. For the treated group the corresponding number was 2. In other words, in the current experiment, it was observed a 60% reduction in infection rate for those salmon that had received the pressure pulse stimulation program compared to the controls.

The analysis shows that there is not a statistically significant difference between the control group and the treated group for the copepodids located inside the mouth and on the gills. Copepodids found inside the mouth and on the gills are mainly a result of copepodids entering the mouth and attaching somewhere along the way before passing by the gills and out again into the water. It could be hypothesized that this is an involuntary successful infection of the salmon

The results for copepodids found on the surface of the fish, i.e. where the copepodids inside the mouth and on the gills are not included, also show a statistically significant difference between the control and the treated group (p-value=0.002).

**Claims**

1. A system (50A, 50B) for inhibiting one or more parasites to infest and/or attach to one or more aquatic animals (30), wherein said system (50A, 50B) includes an acoustic arrangement (100, 110, 120) for generating an acoustic image in a vicinity of the acoustic arrangement (100, 110, 120) within or in a vicinity of an aquatic environment (10) accommodating said one or more aquatic animals (30) and/or parasites, **characterized in that** said acoustic arrangement (100, 110, 120) generates signals at frequencies within 9-100 Hz, and **in that** said system (50A, 50B) includes a sensor arrangement for detecting a spatial proximity of said one or more parasites, or an increase in the concentration of said one or more parasites, said system being arranged for applying said acoustic image depending upon the sensed spatial proximity of said one or more parasites to said acoustic arrangement (100, 110, 120).

2. A system (50A, 50B) as claimed in claim 1, wherein the pulse length of the generated signal has a duration of 1-10 seconds, more preferable 1-3 seconds, more preferable about 2-3 seconds or wherein the generated signal consists of several repeated pulses, and wherein the interval between two pulses is at maximum 5 sec, more preferably 1-3 seconds.

3. A system (50A, 50B) as claimed in claim 1, wherein the acoustic image is applied continuously to the aquatic environment, i.e. wherein the acoustic image pulses are repeated continuously and wherein the pulse length of each of the repeated pulses have a duration of 1-10 seconds, more preferable 1-3 seconds, more preferable 2-3 seconds, and wherein the interval between the repeated pulses is 5 seconds or less, more preferable 1-3 seconds.

4. A system (50A, 50B) as claimed in any one of the preceding claims, wherein said acoustic arrangement is implemented as one or more underwater loudspeakers or a configuration of underwater loudspeakers, piezoelectric underwater transducers, vibrating surfaces, oscillating volume or means for establishing a sudden pressure change in said aquatic environment.

5. A method for inhibiting one or more parasites to infest and/or attach to one or more aquatic animals (30), **characterized in that** said method uses an acoustic arrangement (100, 110, 120) for generating an acoustic image in a vicinity of the acoustic arrangement (100, 110, 120) within and/or in a vicinity of an aquatic environment (10) accommodating said one or more aquatic animals (30) and/or parasites, wherein said acoustic arrangement (100, 110, 120) generates signals at frequencies within 9-100 Hz, more preferable within 9-60 Hz, more preferable 9-40 Hz or 40-60 Hz, and more preferable within 9-40 Hz.

6. A method (50A, 50B) as claimed in claim 5, wherein the acoustic arrangement (100, 110, 120) generates signals with an acoustic pressure in said aquatic environment of about 1000 Pa or more.

7. A method as claimed in claim 6, wherein said acoustic pressure in said aquatic environment is in the range of about 1000 - 14000 Pa, more preferable about 2000-12000 Pa, more preferable about 4000-12000 Pa more preferable about 6000-12000 Pa, more preferable about 8000-12000 Pa, and more preferable about 12000-14000 Pa, and more preferable about 12000 Pa.

8. A method as claimed in claim 5, wherein the pulse length of the generated signal has a duration of 1-10 seconds, more preferable 1-3 seconds, more preferable about 2-3 seconds.

9. A method as claimed in claim 5, wherein the generated signal consists of several repeated pulses, and wherein the interval between two pulses is maximum 5 seconds, more preferably 1-3 seconds.

10. A method as claimed in claim 5, wherein the acoustic image is applied continuously to the aquatic environment, i.e. wherein the acoustic image pulses are repeated continuously and wherein the pulse length of each of the repeated pulses have a duration of 1-10 seconds, more preferable 1-3 seconds, more preferable 2-3 seconds, and wherein the interval between the repeated pulses is 5 seconds or less, more preferable 1-3 seconds.

11. A method as claimed in claim 5, wherein the generated signal is provided as a sweep of the frequencies in the range of 9-50 Hz, more preferable in the range of 9-40 Hz.

12. A method as claimed in claim 5, **characterized in that** said method is adapted to inhibit the infestation and attachment of salmon lice in their copepodid stage.

13. A software product stored on machine-readable data storage media, **characterized in that** said software product is executable upon computing hardware (100) for implementing a method as claimed in any one of claims 5 to 12.

**Patentansprüche**

1. System (50A, 50B) zum Unterbinden, dass ein oder mehrere Parasiten ein oder mehrere Wassertiere (30) befallen und/oder sich an diese anheften, wobei das System (50A, 50B) eine Schallanordnung (100, 110, 120) zum Erzeugen eines Schallbilds in einer Umgebung der Schallanordnung (100, 110, 120) innerhalb oder in einer Umgebung einer aquatischen Umwelt (10), die das eine oder die mehreren Wassertiere (30) und/oder den einen oder die mehreren Parasiten beherbergt, beinhaltet, **dadurch gekennzeichnet, dass**
   die Schallanordnung (100, 110, 120) Signale mit Frequenzen innerhalb von 9-100 Hz erzeugt und dass das System (50A, 50B) eine Sensoranordnung zum Erkennen einer räumlichen Nähe des einen oder der mehreren Parasiten oder eines Anstiegs der Konzentration des einen oder der mehreren Parasiten beinhaltet, wobei das System zum Anwenden des Schallbilds in Abhängigkeit von der erfassten räumlichen Nähe des einen oder der mehreren Parasiten zu der Schallanordnung (100, 110, 120) eingerichtet ist.

2. System (50A, 50B) nach Anspruch 1, wobei die Pulslänge des erzeugten Signals eine Dauer von 1-10 Sekunden, mehr bevorzugt 1-3 Sekunden, mehr bevorzugt etwa 2-3 Sekunden aufweist oder wobei das erzeugte Signal aus mehreren wiederholten Pulsen besteht und wobei das Intervall zwischen zwei Pulsen maximal 5 s, mehr bevorzugt 1-3 Sekunden beträgt.

3. System (50A, 50B) nach Anspruch 1, wobei das Schallbild kontinuierlich auf die aquatische Umwelt angewendet wird, d. h. wobei die Schallbildpulse kontinuierlich wiederholt werden und wobei die Pulslänge jedes der wiederholten Pulse eine Dauer von 1-10 Sekunden, mehr bevorzugt 1-3 Sekunden, mehr bevorzugt 2-3 Sekunden aufweist und wobei das Intervall zwischen den wiederholten Pulsen 5 Sekunden oder weniger, mehr bevorzugt 1-3 Sekunden beträgt.

4. System (50A, 50B) nach einem der vorhergehenden Ansprüche, wobei die Schallanordnung als ein oder mehrere Unterwasserlautsprecher oder eine Konfiguration von Unterwasserlautsprechern, piezoelektrischen Unterwasserwandlern, vibrierenden Oberflächen, einem oszillierenden Volumen oder Mitteln zum Durchführen einer plötzlichen Druckänderung in der aquatischen Umwelt umgesetzt ist.

5. Verfahren zum Unterbinden, dass ein oder mehrere Parasiten ein oder mehrere Wassertiere (30) befallen und/oder sich an diese anheften, **dadurch gekennzeichnet, dass** das Verfahren eine Schallanordnung (100, 110, 120) zum Erzeugen eines Schallbilds in einer Umgebung der Schallanordnung (100, 110, 120) innerhalb und/oder in einer Umgebung einer aquatischen Umwelt (10), die die einen mehrere Wassertiere (30) und/oder Parasiten beherbergt, verwendet, wobei die Schallanordnung (100, 110, 120) Signale mit Frequenzen innerhalb von 9-100 Hz, mehr bevorzugt 9-60 Hz, mehr bevorzugt 9-40 Hz oder 40-60 Hz und mehr bevorzugt innerhalb von 9-40 Hz erzeugt.

6. Verfahren (50A, 50B) nach Anspruch 5, wobei die Schallanordnung (100, 110, 120) Signale mit einem Schalldruck in der aquatischen Umwelt von etwa 1000 Pa oder mehr erzeugt.

7. Verfahren nach Anspruch 6, wobei der Schalldruck in der aquatischen Umwelt im Bereich von etwa 1000-14.000 Pa, mehr bevorzugt etwa 2000-12.000 Pa, mehr bevorzugt etwa 4000-12.000 Pa, mehr bevorzugt etwa 6000-12.000 Pa, mehr bevorzugt etwa 8000-12.000 Pa und mehr bevorzugt etwa 12.000-14.000 Pa und mehr bevorzugt etwa 12.000 Pa liegt.

8. Verfahren nach Anspruch 5, wobei die Pulslänge des erzeugten Signals eine Dauer von 1-10 Sekunden, mehr bevorzugt 1-3 Sekunden, mehr bevorzugt etwa 2-3 Sekunden aufweist.

9. Verfahren nach Anspruch 5, wobei das erzeugte Signal aus mehreren wiederholten Pulsen besteht und wobei das Intervall zwischen zwei Pulsen maximal 5 Sekunden, mehr bevorzugt 1-3 Sekunden beträgt.

10. Verfahren nach Anspruch 5, wobei das Schallbild kontinuierlich auf die aquatische Umwelt angewendet wird, d. h. wobei die Schallbildpulse kontinuierlich wiederholt werden und wobei die Pulslänge jedes der wiederholten Pulse eine Dauer von 1-10 Sekunden, mehr bevorzugt 1-3 Sekunden, mehr bevorzugt 2-3 Sekunden aufweist und wobei das Intervall zwischen den wiederholten Pulsen 5 Sekunden oder weniger, mehr bevorzugt 1-3 Sekunden beträgt.

11. Verfahren nach Anspruch 5, wobei das erzeugte Signal als ein Durchlauf der Frequenzen im Bereich von 9-50 Hz, mehr bevorzugt im Bereich von 9-40 Hz bereitgestellt wird.

**12.** Verfahren nach Anspruch 5, **dadurch gekennzeichnet, dass** das Verfahren dazu geeignet ist, das Befallen mit und das Anheften von Lachsläusen in deren Kopepodidstadium zu unterbinden.

**13.** Softwareprodukt, das auf einem maschinenlesbaren Datenspeichermedium gespeichert ist, **dadurch gekennzeichnet, dass** das Softwareprodukt auf Datenverarbeitungshardware (100) zum Umsetzen eines Verfahrens nach einem der Ansprüche 5 bis 12 ausführbar ist.

**Revendications**

**1.** Système (50A, 50B) permettant d'empêcher qu'un ou plusieurs parasites n'infestent un ou plusieurs animaux aquatiques (30), et/ou ne se fixent sur ces derniers, dans lequel ledit système (50A, 50B) comprend un agencement acoustique (100, 110, 120) destiné à générer une image acoustique à proximité de l'agencement acoustique (100, 110, 120) à l'intérieur d'un environnement aquatique (10) recevant ledit ou lesdits animaux aquatiques (30) et/ou ledit ou lesdits parasites, ou à proximité de ce dernier, **caractérisé en ce que** ledit agencement acoustique (100, 110, 120) génère des signaux à des fréquences comprises dans la gamme de 9 à 100 Hz, et **en ce que** ledit système (50A, 50B) comprend un agencement de capteurs permettant de détecter une proximité spatiale dudit ou desdits parasites, ou une augmentation de la concentration dudit ou desdits parasites, ledit système étant conçu pour appliquer ladite image acoustique en fonction de la proximité spatiale détectée dudit ou desdits parasites avec ledit agencement acoustique (100, 110, 120).

**2.** Système (50A, 50B) selon la revendication 1, dans lequel la longueur d'impulsion du signal généré a une durée de 1 à 10 secondes, on préfère davantage de 1 à 3 secondes, on préfère encore d'environ de 2 à 3 secondes, ou dans lequel le signal généré est constitué de plusieurs impulsions répétées, et dans lequel l'intervalle entre deux impulsions est au maximum de 5 s, on préfère davantage de 1 à 3 secondes.

**3.** Système (50A, 50B) selon la revendication 1, dans lequel l'image acoustique est appliquée de façon continue à l'environnement aquatique, c'est-à-dire dans lequel les impulsions d'images acoustiques sont répétées de façon continue et dans lequel la longueur d'impulsion de chacune des impulsions répétées a une durée de 1 à 10 secondes, on préfère davantage de 1 à 3 secondes, on préfère encore de 2 à 3 secondes, et dans lequel l'intervalle entre les impulsions répétées est inférieur ou égal à 5 secondes, on préfère davantage de 1 à 3 secondes.

**4.** Système (50A, 50B) selon l'une quelconque des revendications précédentes, dans lequel ledit agencement acoustique est mis en oeuvre sous forme d'un ou de plusieurs haut-parleurs sous-marins ou d'une configuration de haut-parleurs sous-marins, de transducteurs piézoélectriques sous-marins, de surfaces vibrantes, de volume oscillant ou de moyens permettant d'établir une variation de pression brutale dans ledit environnement aquatique.

**5.** Procédé permettant d'empêcher qu'un ou plusieurs parasites n'infestent un ou plusieurs animaux aquatiques (30), et/ou ne se fixent sur ces derniers, **caractérisé en ce que** ledit procédé fait appel à un agencement acoustique (100, 110, 120) destiné à générer une image acoustique à proximité de l'agencement acoustique (100, 110, 120) à l'intérieur d'un environnement aquatique (10) recevant ledit ou lesdits animaux aquatiques (30) et/ou ledit ou lesdits parasites, et/ou à proximité de ce dernier, dans lequel ledit agencement acoustique (100, 110, 120) génère des signaux à des fréquences comprises dans la gamme de 9 à 100 Hz, on préfère davantage de 9 à 60 Hz, on préfère encore de 9 à 40 Hz ou de 40 à 60 Hz, et l'on préfère encore davantage de 9 à 40 Hz.

**6.** Procédé (50A, 50B) selon la revendication 5, dans lequel l'agencement acoustique (100, 110, 120) génère des signaux avec une pression acoustique environ égale ou supérieure à 1000 Pa dans ledit environnement aquatique.

**7.** Procédé selon la revendication 6, dans lequel ladite pression acoustique dans ledit environnement aquatique est comprise dans la plage d'environ 1000 à 14000 Pa, on préfère davantage d'environ 2000 à 12000 Pa, on préfère encore d'environ 4000 à 12000 Pa, on préfère encore davantage d'environ 6000 à 12000 Pa, on préfère encore plus d'environ 8000 à 12000 Pa, et encore plus d'environ 12000 à 14000 Pa, et l'on préfère davantage encore plus d'environ 12000 Pa.

**8.** Procédé selon la revendication 5, dans lequel la longueur d'impulsion du signal généré a une durée de 1 à 10 secondes, on préfère davantage de 1 à 3 secondes, on préfère encore davantage d'environ de 2 à 3 secondes.

**9.** Procédé selon la revendication 5, dans lequel le signal généré est constitué de plusieurs impulsions répétées, et dans lequel l'intervalle entre deux impulsions a une durée maximale de 5 secondes, on préfère davantage de 1 à 3 secondes.

10. Procédé selon la revendication 5, dans lequel l'image acoustique est appliquée de façon continue à l'environnement aquatique, c'est-à-dire dans lequel les impulsions d'image acoustique sont répétées de façon continue et dans lequel la longueur d'impulsion de chacune des impulsions répétées a une durée de 1 à 10 secondes, on préfère davantage de 1 à 3 secondes, on préfère encore davantage de 2 à 3 secondes, et dans lequel l'intervalle entre les impulsions répétées est inférieur ou égal à 5 secondes, on préfère davantage de 1 à 3 secondes.

11. Procédé selon la revendication 5, dans lequel le signal généré est obtenu par un balayage des fréquences comprises dans la gamme de 9 à 50 Hz, on préfère davantage comprises dans la gamme de 9 à 40 Hz.

12. Procédé selon la revendication 5, **caractérisé en ce que** ledit procédé est conçu pour empêcher l'infestation du pou du saumon et la fixation de ce dernier à son stade copépodite.

13. Produit de logiciel mémorisé sur un support de mémorisation de données lisible par machine, **caractérisé en ce que** ledit produit de logiciel est exécutable sur un matériel informatique (100) de façon à mettre en oeuvre un procédé selon l'une quelconque des revendications 5 à 12.

FIG. 1

S1    S2

100

110

120

20, 40

130

20, 40

# FIG. 2

Fig. 3

Boxplot of exposed and control group for skin/bag/fins

# Fig. 4

**EP 2 793 566 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9417657 A1